Europäisches Patentamt

European Patent Office

Office européen des brevets

(19)

(11) Numéro de publication : **0 090 719**
A1

(12)

# DEMANDE DE BREVET EUROPEEN

(21) Numéro de dépôt: **83400585.2**

(51) Int. Cl.³: **A 23 L 1/337**

(22) Date de dépôt: **22.03.83**

(30) Priorité: **25.03.82 FR 8205812**

(43) Date de publication de la demande: **05.10.83**
**Bulletin 83/40**

(84) Etats contractants désignés: **BE DE GB IT NL SE**

(71) Demandeur: **Le Trividic, Noémie Marie Jeanne, Foyer Résidence Brocéliande Route de Saint Malon, F-35380 Paimpont (FR)**

(72) Inventeur: **Le Trividic, Noémie Marie Jeanne, Foyer Résidence Brocéliande Route de Saint Malon, F-35380 Paimpont (FR)**

(74) Mandataire: **Le Guen, Louis François, 13, rue Emile Bara BP 91, F-35802 Dinard Cedex (FR)**

(54) **Procédé de préparation d'algues alimentaires.**

(57) Le procédé de préparation d'algues alimentaires à partir d'algues naturelles du genre fucus ou laminaire qui ont été préalablement séchées et coupées en morceaux, comporte une phase de trempage des morceaux d'algues à traiter dans un bain de trempage contenant de l'eau douce et du vin, suivi après égouttage, d'une phase de cuisson dans un bouillon de cuisson contenant également de l'eau douce et additionné, après ébullition de vin.

Le bain de trempage contient encore du jus de viande, du miel, du coriandre, du gingembre et du romarin, avec la composition suivante pour 100 g d'algues:

— 1 l d'eau très chaude, mais non bouillante,
— de 0 à 0,05 l de vin,
— de 0 à 10 g de concentré de jus de viande,
— de 0 à 15 g de miel,
— de 0 à 2 g de coriandre,
— de 0 à 2 g de gingembre et
— de 0 à une pincée (quelques mg) de romarin,
la phase de trempage durant une douzaine d'heures.

Le bouillon de cuisson contient encore du jus de viande, du miel, du coriandre, du gingembre, et du romarin, avec la composition suivante pour 1 kg d'algues égouttées:

— de 5 à 10 l d'eau très chaude,
— de 0 à 20 g de concentré de jus de viande,
— d'une cuillerée à café à une cuillerée à soupe de miel,
— de 0 à 2 g de coriandre,
— de 0 à 2 g de gingembre et,
— de 0 à une pincée de romarin,
le bouillon de cuisson étant agité et porté à ébullition, puis additionné de 0,10 l de vin, puis de nouveau porté à ébullition pour cuire les algues pendant environ 30 minutes, les algues cuites étant ensuite refroidies et égouttées.

## Procédé de préparation d'algues alimentaires

La présente invention concerne un procédé de préparation d'algues destinées à être utilisées dans l'alimentation.

On connaît déjà des procédés de préparation d'algues qui sont spécifiques aux aliments dans la composition desquels elles entrent.

Un objet de la présente invention consiste à prévoir des procédés de préparation d'algues qui permettent d'obtenir un produit qui, à quelques variantes près, est d'une utilisation générale dans l'alimentation.

Suivant une caractéristique de l'invention, il est prévu un procédé de préparation d'algues alimentaires à partir d'algues naturelles du genre fucus ou laminaire qui ont été préalablement séchées et coupées en morceaux, le procédé comportant une phase de trempage des morceaux d'algues à traiter dans un bain de trempage contenant de l'eau douce et du vin, suivi après égouttage, d'une phase de cuisson dans un bouillon de cuisson contenant également de l'eau douce et additionné, après ébullition de vin, dans lequel:

le bain de trempage contient encore du jus de viande, du miel, du coriandre, du gingembre et du romarin, avec la composition suivante pour 100 g d'algues:

- 1 l d'eau très chaude, mais non bouillante,
- de 0 à 0,05 l de vin,
- de 0 à 10 g de concentré de jus de viande,
- de 0 à 15 g de miel,

- de 0 à 2 g de coriandre,

- de 0 à 2 g de gingembre et

- de 0 à une pincée (quelques mg) de romarin,

la phase de trempage durant une douzaine d'heures, et

le bouillon de cuisson contient encore du jus de viande, du miel, du coriandre, du gingembre, et du romarin, avec la composition suivante pour 1 kg d'algues égouttées:

- de 5 à 10 l d'eau très chaude,

- de 0 à 20 g de concentré de jus de viande,

- d'une cuillerée à café à une cuillerée à soupe de miel,

- de 0 à 2 g de coriandre,

- de 0 à 2 g de gingembre et,

- de 0 à une pincée de romarin,

le bouillon de cuisson étant agité et porté à ébullition, puis additionné de 0,10 l de vin, puis de nouveau porté à ébullition pour cuire les algues pendant environ 30 minutes, les algues cuites étant ensuite refroidies et égouttées.

Suivant une autre caractéristique, pour obtenir des algues convenant, de préférence, pour des aliments neutres,

la composition du bain de trempage est la suivante:

- 1 l d'eau très chaude, mais non bouillante,

- 5 g de concentré de jus de viande,

- une cuillerée à café de miel,

- 2 g de coriandre,

- 2 g de gingembre, et

- une petite pincée de romarin, et

le bouillon de cuisson a la composition suivante:

- 5 l d'eau tiède,

- une cuillerée à café de miel,

- 2 g de coriandre,

- 2 g de gingembre, et

- une petite pincée de romarin,

la cuisson étant effectuée comme mentionnée ci-dessus.

Suivant une autre caractéristique, pour obtenir des algues utilisables avec des aliments salés,

la composition du bain de trempage est le suivant:

- 1 l d'eau chaude très chaude, mais non bouillante,

- 0,05 l de vin,

- 10 g de concentré de jus de viande, et

le bouillon de cuisson a la composition suivante:

- 5 l d'eau très chaude,

- 20 g de concentré de jus de viande,

- une cuillerée à soupe de miel,

- 2 g de gingembre,

la cuisson étant effectuée comme mentionnée ci-dessus, mais la durée de la cuisson étant réduite à 20 ou 25 minutes environ et les algues étant laissées à refroidir dans le bouillon de cuisson.

Suivant une autre caractéristique, pour obtenir des algues convenant pour des aliments sucrés,

le bain de trempage a la composition suivante:

- 1 l d'eau très chaude, mais non bouillante,

- 0,05 l de vin,

- ½ cuillerée à soupe de miel,

- 1 g de coriandre, et

le bouillon de cuisson a la composition suivante:

- 10 l d'eau très chaude,

- une cuillerée à soupe de miel,

- 2 g de coriandre,

la cuisson étant effectuée comme mentionnée ci-dessus, mais la durée de la cuisson étant réduite à 20 ou 25 minutes environ et les algues étant laissées à refroidir dans le bouillon de cuisson.

Les caractéristiques de l'invention mentionnées ci-dessus, ainsi que d'autres, apparaîtront plus clairement à la lecture de la description suivante d'exemples de mises en oeuvre des algues préparées suivant l'invention.

Exemple 1 d'application avec aliments neutres

On prépare des algues suivant le procédé mentionné dans la seconde caractéristique mentionnée ci-dessus, en prenant soin, après avoir préparé le bouillon de cuisson de le verser sur les algues trempées, puis égouttées, en remuant vivement le mélange et en le faisant cuire sur feu vif en le couvrant. Les algues ainsi préparées peuvent être employées pour la préparation de légumes et de soupe, après les avoir hachées grossièrement. Elles sont, de préférence, incorporées au moins vingt minutes avant la fin de la cuisson des aliments auxquels elles sont destinées.

### Exemple 2 d'application aux aliments salés:

On prépare les algues suivant le procédé mentionné dans la 3ème caractéristique ci-dessus, les algues étant considérées comme cuites quand elles cèdent légèrement sous l'ongle. On a utilisé ces algues dans une viande au jus. On hache finement les algues cuites et on les met directement dans la casserole où mijote doucement la viande en ayant soin de tourner lentement la sauce. On laisse ensuite cuire l'ensemble un minimum de 10 minutes, en veillant à ce que ni la viande, ni la sauce n'attache au fond de la casserole. On a pris la précaution ne pas trop assaisonner la viande avant l'introduction des algues, en se laissant la possibilité de rectifier ensuite, si nécessaire. La viande ainsi préparée est cuite en fin de cuisson, qui doit être la plus longue possible.

On a constaté que la présence des algues allège la sauce et amplifie le goût de la viande, tout en la rendant plus moelleuse.

D'une manière générale, en ce qui concerne les sauces, on a pu constater que ces algues leur apportaient une saveur particulière. Pour certaines, comme la sauce béchamel, elles améliore l'effet de la présentation. Pour les sauces froides, telle que la mayonnaise, par exemple, loin de les faire tourner, ces algues maintiennent leur fermeté. Dans ce cas, elles sont, de préférence, ajoutées en fin de préparation, après avoir été finement hachée, comme du persil.

### Exemple 3 d'application aux aliments sucrés

On prépare les algues suivant le procédé mentionné dans la 4ème caractéristique ci-dessus. Pour de la pâtisserie, on prépare la pâte à part suivant la recette classique de la pâtisserie à préparer. On ajoute les morceaux d'algues au dernier moment dans la pâte, par exemple à raison de 100 g par kg. Puis on retravaille la pâte avec elles. Le temps de cuisson de la pâtisserie reste en principe le même que pour la pâtisserie sans algues. En dehors de l'amélioration du goût qui a pu être constaté, les algues aident à conserver la pâtisserie plus longtemps moelleuse.

Pour faire des crèmes, les algues sont à mélanger avec le lait chaud et doivent être battues avec lui. Pour faire des compotes, les algues doivent être mises à cuire avec les fruits.

Pour la pâtisserie, il est préférable de hacher très finement les algues. Pour les compotes, on les utilise directement sortant de cuisson, suivant le procédé de l'invention, sans les hacher davantage.

Dans ce qui précède, on a considéré qu'une cuillerée a café de miel pesait environ 5 à 6 g et une cuillerée à soupe jusqu'à 25 à 30 g.

6

0090719

REVENDICATIONS

1) Procédé de préparation d'algues alimentaires à partir d'algues naturelles du genre fucus ou laminaire qui ont été préalablement séchées et coupées en morceaux, le procédé comportant une phase de trempage des morceaux d'algues à traiter dans un bain de trempage contenant de l'eau douce et du vin, suivi après égouttage, d'une phase de cuisson dans un bouillon de cuisson contenant également de l'eau douce et additionné, après ébullition de vin, caractérisé en ce que:

le bain de trempage contient encore du jus de viande, du miel, du coriandre, du gingembre et du romarin, avec la composition suivante pour 100 g d'algues:

- 1 l d'eau très chaude, mais non bouillante,
- de 0 à 0,05 l de vin,
- de 0 à 10 g de concentré de jus de viande,
- de 0 à 15 g de miel,
- de 0 à 2 g de coriandre,
- de 0 à 2 g de gingembre et
- de 0 à une pincée (quelques mg) de romarin,

la phase de trempage durant une douzaine d'heures, et le bouillon de cuisson contient encore du jus de viande, du miel, du coriandre, du gingembre, et du romarin, avec la composition suivante pour 1 kg d'algues égouttées:

- de 5 à 10 l d'eau très chaude,
- de 0 à 20 g de concentré de jus de viande,
- d'une cuillerée à café à une cuillerée à soupe de miel,
- de 0 à 2 g de coriandre,
- de 0 à 2 g de gingembre et,
- de 0 à une pincée de romarin,

le bouillon de cuisson étant agité et porté à ébullition, puis additionné de 0,10 l de vin, puis de nouveau porté à ébullition pour cuire les algues pendant environ 30 minutes, les algues cuites étant ensuite refroidies et égouttées.

2) Procédé suivant la revendication 1, pour obtenir des algues convenant, de préférence, pour des aliments neutres, caractérisé en ce que:

la composition du bain de trempage est la suivante:

- 1 l d'eau très chaude, mais non bouillante,

- 5 g de concentré de jus de viande,

- une cuillerée à café de miel,

- 2 g de coriandre,

- 2 g de gingembre, et

- une petite pincée de romarin, et

le bouillon de cuisson a la composition suivante:

- 5 l d'eau tiède,

- une cuillerée à café de miel,

- 2 g de coriandre,

- 2 g de gingembre, et

- une petite pincée de romarin,

la cuisson étant effectuée comme mentionnée ci-dessus.

3) Procédé suivant la revendication 1, pour obtenir des algues utilisables avec des aliments salés, caractérisé en ce que:

la composition du bain de trempage est le suivant:

- 1 l d'eau chaude très chaude, mais non bouillante,

- 0,05 l de vin,

- 10 g de concentré de jus de viande, et

le bouillon de cuisson a la composition suivante:

- 5 l d'eau très chaude,

. - 20 g de concentré de jus de viande,

- une cuillerée à soupe de miel,

- 2 g de gingembre,

la cuisson étant effectuée comme mentionnée ci-dessus, mais la durée de la cuisson étant réduite à 20 ou 25 minutes environ et les algues étant laissées à refroidir dans le bouillon de cuisson.

4) Procédé suivant la revendication 1, pour obtenir des algues convenant pour des aliments sucrés, caractérisé en ce que:

le bain de trempage a la composition suivante:

- 1 l d'eau très chaude, mais non bouillante,

- 0,05 l de vin,

- ½ cuillerée à soupe de miel,

- 1 g de coriandre, et

le bouillon de cuisson a la composition suivante:

- 10 l d'eau très chaude,

- une cuillerée à soupe de miel,

- 2 g de coriandre,

8 . 0090719

la cuisson étant effectuée comme mentionnée ci-dessus, mais la durée de la cuisson étant réduite à 20 ou 25 minutes environ et les algues étant laissées à refroidir dans le bouillon de cuisson.

Office européen
des brevets

**RAPPORT DE RECHERCHE EUROPEENNE**

Numéro de la demande

EP 83 40 0585

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 479 660 (N.M.-J. LE TRIVIDIC) * Revendication 1 * | 1 | A 23 L   1/337 |
| Y | FR-A-2 479 659 (N.M.-J. LE TRIVIDIC) * Revendication 1 * | | |
| A | FR-A-2 479 658 (N.M.-J. LE TRIVIDIC) * Revendication 1 * | | |

DOMAINES TECHNIQUES RECHERCHES (Int. Cl. 3)

A 23 L   1/00

Le présent rapport de recherche a été établi pour toutes les revendications

| Lieu de la recherche | Date d'achèvement de la recherche | Examinateur |
|---|---|---|
| BERLIN | 30-05-1983 | SCHULTZE D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82